# EUROPÄISCHE PATENTSCHRIFT

(11) **EP 1 101 692 B1**
(45) Veröffentlichungstag und Bekanntmachung des Hinweises auf die Patenterteilung: **26.01.2005**
(21) Anmeldenummer: 00890330.4
(22) Anmeldetag: 08.11.2000
(51) Int. Cl.: B62D 25/12, E05F 15/02, E05F 15/04, F16K 15/00, F16K 17/00, E05F 15/00, F15B 7/10, F15B 11/00, F15B 13/10

(54) **Hydraulische Betätigungsanordnung**
Hydraulic operating device
Dispositif de commande hydraulique

(30) Priorität: 22.11.1999 AT 198399
(43) Veröffentlichungstag der Anmeldung: 23.05.2001
(73) Patentinhaber: Hoerbiger Hydraulik GmbH, 86956 Schongau (DE)
(72) Erfinder: Huber, Gerhard, Dipl.-Ing., 87662 Frankenhofen (DE); Hollerbach, Bernhard, 86989 Steingaden / Urspring (DE)
(74) Vertreter: Laminger, Norbert, Mag.

(56) Entgegenhaltungen:
- EP-A- 0 803 630
- EP-A- 0 893 605
- DE-A- 3 502 518
- US-A- 4 548 233
- US-A- 5 692 537

## Beschreibung

Die Erfindung betrifft eine hydraulische Betätigungsanordnung, insbesonders für Deckel, Türen, Verdecke und dergleichen an Fahrzeugen, mit zumindest einem doppeltwirkenden Arbeitszylinder, dessen Arbeitsräume über je ein gegenseitig entsperrbares Rückschlagventil mit je einer Seite einer umschaltbaren Druckmittelquelle in Verbindung stehen, wobei jeder Arbeitsraum über zumindest ein Druckbegrenzungs-Vorspannventil mit einem Druckmittelreservoir verbunden ist, und zumindest ein Arbeitsraum zusätzlich über zumindest ein weiteres Vorspannventil mit dem Druckmittelreservoir verbunden ist.

Derartige Anordnungen sind im Stand der Technik bekannt, z.B. aus EP 893 605, und ermöglichen beispielsweise die automatische Betätigung von Fahrzeugtüren, Motorhauben, Wartungsklappen oder auch von Abdeckklappen des Kofferraumes oder eines ein Faltverdeck aufnehmenden Raumes. Durch die gegenseitig entsperrbaren Rückschlagventile, die beispielsweise auch für pneumatische Betätigungseinrichtungen in der DE 43 34 843 A1 beschrieben sind, wird sichergestellt, dass beim Ausschalten oder Ausfallen des Betriebsdruckes die Abdeckklappe in der jeweiligen Stellung hydraulisch gesperrt stehen bleibt, um unkontrollierte Bewegungen und damit einhergehende Gefahren auszuschalten. Das Vorspannventil ermöglicht eine kontrollierte Weiterbewegung der Abdeckklappe in diesem Zustand beispielsweise von Hand aus, um etwa ein Not-Schließen gegen eine vom Vorspannventil vorgegebene Kraft zu erlauben. Auch in der AT 405 752 B1 ist eine ähnliche Konstruktion beschrieben, bei welche aber keinerlei Vorkehrungen getroffen sind, um unterschiedliche Kraftniveaus im Zuge der manuellen Betätigung bereitstellen zu können.

Um im Notbetrieb eine Reduzierung des zur Bewegung des sonst hydraulisch betätigten Teils nötigen Handkraft zu erzielen, ist in der DE 197 40 029 C2 vorgeschlagen worden, ein Druckbegrenzungsventil mit zwei unterschiedlichen Betriebspunkten vorzusehen, so dass nach Überwinden eines ersten höheren Schwellenwertes zu Beginn der Notbetätigung anschließend ein geringerer Druck notwendig ist, um das Ventil geöffnet zu halten und das Teil händisch in die gewünschte Stellung zu bringen. Allerdings ist bei dieser Anordnung das Ventilelement dauernd vom gerade herrschenden Betriebsdruck in Öffnungsrichtung beaufschlagt und der erste Druckschwellenwert muss dem maximal möglichen oder gewünschten Systemdruck entsprechen, was zu sehr hohen zu überwindenden Anfangskräften im Notbetrieb führt. Überdies ist das zweistufige Vorspannventil der DE 197 40 029 C2 mit einem zylindrisch abgestuften Dichtelement versehen, so dass ein wesentlich größerer Weg zur Öffnung der ersten, höheren Druckstufe notwendig ist, was eine längere Einwirkung einer höheren Kraft zu Beginn der Handbetätigung nötig macht.

Zweistufige Ventile ganz allgemein zeigen auch beispielsweise die DE 41 30 832 C1, wobei hier aber die beiden Stufen nicht hintereinander in ein- und derselben Durchströmpassage vorgesehen sind, die US- 5,918,628 A mit einem Rückschlagventil, bei welchem keinerlei Hinweise über die Kräfteverhältnisse vor und nach dem Aufdrücken des Ventils gegeben sind, da lediglich die Durchströmquerschnitte im Verlauf der Öffnungsbewegung von Bedeutung sind. Zwei unabhängig voneinander funktionierende und hintereinandergeschaltete Ventilelemente, ohne Hinweis auf eine geregelte Bewegungsabfolge und unterschiedliche Druckstufen, bietet das Sicherheits-Rückschlagventil der US 3,916,946 A.

Die Aufgabe der vorliegenden Erfindung ist es daher eine Anordnung der eingangs beschriebenen Art so zu verbessern, dass die Handkraft im Notbetrieb sowohl zu Beginn der manuellen Bewegung als auch danach deutlich reduziert werden kann, wobei diese Kraftniveaus für beide Bewegungsrichtungen unabhängig vom maximalen Systemdruck und in weiterer Folge auch unabhängig voneinander gewählt werden können. Dabei soll bei einfacher Herstellung sicher die Einhaltung der beiden Druckschwellenwerte gewährleistet und schnell den Übergang zwischen diesen beiden Schaltstufen ermöglicht werden.

Die erste Aufgabe wird erfindungsgemäß gelöst, indem die eingangs beschriebene hydraulische Betätigungsanordnung derart verbessert wird, dass das zumindest eine weitere Vorspannventil zumindest zwei unterschiedliche Druckschwellenwerte aufweist. Die Kräfte für den Notbetrieb sind durch die Druckschwellenwerte des zweiten Vorspannventils gegeben, von welchen der höhere maximal dem höchsten Systemdruck entsprechen kann, vorzugsweise aber wesentlich geringer ist. Er wird vorteilhafterweise derart gewählt, dass der normalerweise hydraulisch betätigte Teil in jeder Lage - seiner und der des Fahrzeuges - gerade sicher fixiert ist und dass eine die Haltekraft geringfügig übersteigende Kraft zu seiner Auslenkung aus dieser Lage ausreicht. Nach Einleiten der manuellen Bewegung ist nur mehr eine Kraft zur Weiterbewegung notwendig, die durch den zweiten, niedrigeren Druckschwellenwert des zweiten Vorspannventils gegeben ist. Diese vorteilhafte Kraftreduktion kann in der einfachsten Ausführungsform nur für eine Bewegungsrichtung vorgesehen sein, kann aber selbstverständlich auch für beide Bewegungsrichtungen des normalerweise hydraulisch betätigten Teils dadurch erzielt werden, dass beide Arbeitsräume über zumindest ein gemeinsames, vorzugsweise über jeweils ein eigenes Vorspannventil mit dem Druckreservoir verbunden sind.

Vorteilhafterweise ist dabei der Druckschwellenwert zum Öffnen des weiteren Vorspannventils höher als Druckschwellenwert zu dessen Offenhalten.

Um eine Einstellung der Betätigungskräfte für Öffnung- und Schließrichtung unabhängig voneinander zu erzielen, ist gemäß einem weiteren Merkmal der Erfindung jeder Arbeitsraum über je ein eigenes Vorspannventil mit dem Druckmittelreservoir verbunden.

In beiden oben genannten Fällen ist es auch denkbar, dass zwei separate Druckbegrenzungsventile für den maximalen Systemdruck vorhanden sind, eines für das Ausfahren des Arbeitszylinders und eines für das Einfahren. Dabei sind dann die Druckschwellenwerte für die jeweiligen zweiten Vorspannventile maximal so hoch angesetzt wie der Schwellenwert des auf dieser Seite des Arbeitszylinders angeschlossenen Druckbegrenzungsventils.

Bei Arbeitszylindern mit unterschiedlichem Querschnitt von Kolben- bzw. Stangenseite ist vorteilhafterweise zum Volumsausgleich vorgesehen, dass der kolbenseitige Arbeitsraum des Arbeitszylinders über eine Leitung mit einem zum Druckmittelreservoir sperrenden Rückschlagventil mit diesem Druckmittelreservoir verbunden ist.

Die erweiterte Aufgabe der vorliegenden Erfindung wird durch eine Betätigungsanordnung mit einem Vorspannventil gelöst, das dadurch gekennzeichnet ist, dass das Vorspannventil ein Ventilgehäuse und ein darin verschiebbares Ventilelement zum Öffnen oder Schließen einer weiteren Durchströmöffnung in einer Passage für das Druckmittel aufweist, wobei das Ventilelement in Schließrichtung der Durchströmöffnung von einem elastischen Element beaufschlagbar ist, und bei dem ein Steueranschluss vorgesehen ist, über welchen das Ventilelement ebenfalls in Schließrichtung mit einer Kraft beaufschlagbar ist, und dass in der Passage eine durch das Ventilelement sperrbare Durchströmöffnung vorgesehen ist, wobei die Fläche der Durchströmöffnung kleiner ist als die Querschnittsfläche des Ventilelementes und wobei das die Durchströmöffnung steuernde vordere Ende des Ventilelementes kegelförmig ausgeführt ist. Durch das Zusammenwirken des von der Durchströmöffnung definierten Ventilsitzes und dem Ventilkegel des Ventilelementes wird eine optimale Dichtwirkung an der Kante des Ventilsitzes erreicht, bei gleichzeitiger schnellstmöglicher Freigabe eines großen Öffnungsquerschnittes, um so rasch als möglich den Übergang zwischen den beiden Druckschwellenwerten zu gewährleisten, die durch die unterschiedlichen druckbeaufschlagten Flächen (gesamter Ventilkegel - niedrigerer Druckschwellenwert, Querschnitt des Ventilsitzes - höherer Druckschwellenwert) gegeben sind.

Vorzugsweise ist vorgesehen, dass das vordere Ende des Ventilelementes metallisch dichtend mit der Kante der Durchströmöffnung zusammenwirkt und das Ventilelement vorzugsweise auch die zweite Durchströmöffnung metallisch dichtend im Veritilgehäuse geführt ist.

Gemäß einem weiteren Merkmal der Erfindung ist zum hydraulischen Sperren des Vorspannventils ein Kolben vorgesehen, der mittels des am Steueranschluss anliegenden Drucks auf das der Kante der Durchströmöffnung gegenüberliegende Ende des Ventilelements hin mit einer Kraft beaufschlagbar ist.

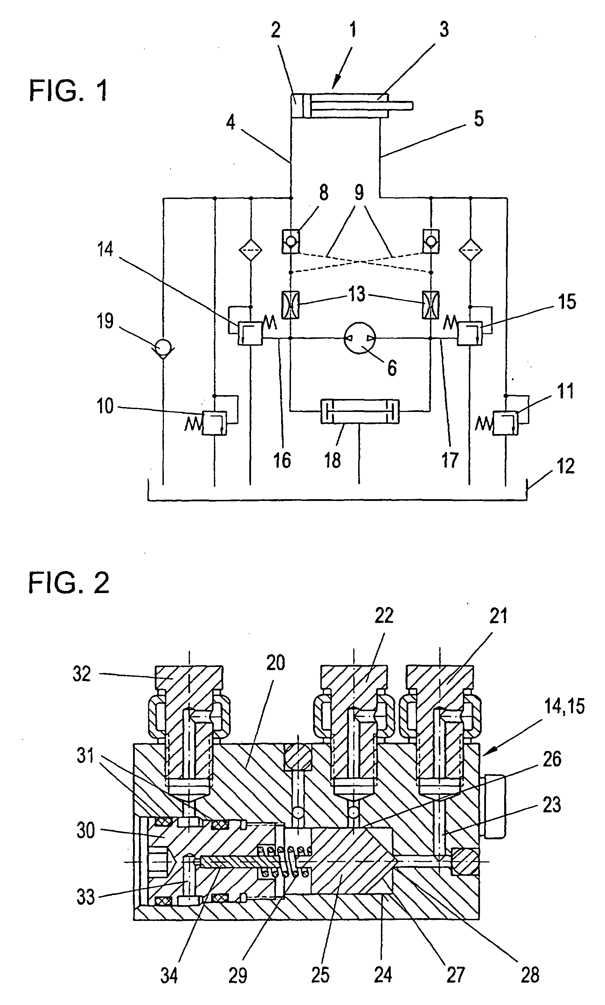

. Die Erfindung wird im folgenden anhand der Zeichnungen näher erläutert. Fig. 1 zeigt dabei einen schematischen hydraulischen Schaltplan einer erfindungsgemäßen Anordnung und Fig. 3 zeigt einen Längsschnitt durch ein erfindungsgemäßes zweistufiges Vorspannventil.

Die in Fig. 1 dargestellt Anordnung zur hydraulischen Betätigung einer Abdeckklappe, eines Heckdeckels oder eines sonstigen beweglichen Fahrzeugteils an einem Fahrzeug weist zumindest einen doppeltwirkenden hydraulischen Arbeitszylinder 1 auf, der einerseits am Fahrzeug und andererseits am zu bewegenden Teil, etwa der Abdeckklappe, angelenkt ist. Die beiden Arbeitsräume 2, 3 des Arbeitszylinders 1 sind über Leitungen 4, 5 mit einer umschaltbaren Druckmittelquelle 6. vorzugsweise einer umschaltbaren Pumpe mit elektrischem Antriebsmotor, verbunden, welches über eine Anschlussleitung mit dem elektrischen Bordnetz und allenfalls der Steuerelektronik des Fahrzeuges in Verbindung steht. Anstelle der beidseitigen direkten Anlenkung des Arbeitszylinders 1, welche natürlich entsprechend bewegliche Leitungen 4, 5 oder ein insgesamt mit dem Arbeitszylinder 1 mitbewegbares Hydraulikaggregat 6 erfordert, könnte die Anlenkung des Arbeitszylinders 1 auf der Fahrzeug- und/oder Abdeckklappenseite auch indirekt über Hebel, Scharnieranordnungen oder dergleichen erfolgen, wobei der Arbeitszylinder 1 auch relativ zum Fahrzeug feststehend montiert sein könnte.

In den Leitungen 4, 5, die jeweils mit einer Seite der umschaltbaren Druckquelie 6 verbunden sind, ist jeweils ein Rückschlagventil 7, 8 vorgesehen. Die beiden Rückschlagventile 7, 8 sind dabei über Leitungen 9 verbunden und über diese Leitungen 9 gegenseitig entsperrbar. Über je ein Druckbegrenzungsventil 10, 11 sind die beiden Arbeitsräume 2, 3 des Arbeitszylinders 1 in das Druckmittelreservoir, vorzugsweise einen Hydraulikflüssigkeitstank 12 abgesteuert, sobald ein einstellbares Druckniveau auf der entsprechenden Seite erreicht oder überschritten wird. Die Druckbegrenzungsventile 10, 11 bestimmen den maximal möglichen Druck auf der jeweiligen Seite des Arbeitszylinders 1 und in vereinfachten Ausführungsformen könnte auch nur ein Druckbegrenzungsventil für beide Seiten gemeinsam vorgesehen sein, das einen einzigen Maximalwert für den Systemdruck vorgibt. In den Verbindungsleitungen 4, 5 sind, vorzugsweise zwischen dem Hydraulikaggregat 6 und den Rückschlagventilen 7, 8 noch Düsen 13 oder ähnliche Drosselelemente eingebaut.

Parallel zu den Druckbegrenzungsventilen 10, 11, bzw. zu den Leitungen in welchen sie sich befinden, ist jeder der Arbeitsräume 2, 3 des Arbeitszylinders 1 noch über jeweils ein zweistufiges Vorspannventil 14, 15 mit dem Druckmittelreservoir 12 verbunden. Diese zweiten Vorspannventile 14, 15, sind über Steuerleitungen 16, 17 mit der umschaltbaren Druckmittelquelle 6 in einer Weise verbunden, dass diese Vorspannventile 14, 15 zumindest bei anliegendem Systemdruck - vor den Rückschlagventilen 7, 8 - hydraulisch vollständig gesperrt sind, so dass sich auf der entsprechenden Seite ein Druck bis zum durch das jeweilige Druckbegrenzungsventil 10, 11 vorgegebenen Maximaldruck aufbauen kann.

Beide Seiten der umschaltbaren Druckmittelquelle 6 sind schließlich noch über ein Umschaltventil 18 miteinander verbunden, welches auch einen Anschluß an das Druckmittelreservoir 12 aufweist. Schließlich ist noch zum Volumsausgleich bei Notbetrieb der kolbenseitige Arbeitsraum 2 des Arbeitszylinders 1 über ein in Richtung Druckmittelreservoir 12 sperrendes Rückschlagventil 19 mit diesem Druckmittelreservoir 12 verbunden.

Im folgenden wird die Funktion der dargestellten Anordnung wie in Fig. 1 dargestellt erläutert. Beim hydraulischen Öffnen bzw. Schließen fährt der Arbeitszylinder 1 aus bzw. ein. Der Motor der Pumpe der Druckmittelquelle 6 ist bestromt, die Pumpe läuft und liefert Druckmedium über die Rückschlagventile 7 bzw. 8 in den kolbenseitigen Arbeitsraum 2 bzw. den stangenseitigen Arbeitsraum 3. Über die Leitungen 16 bzw. 17 ist das auf der gleichen Seite wie das jeweils durchströmte Rückschlagventil 7, 8 liegende Vorspannventil 14 oder 15 hydraulisch gesperrt. Der Druck im Arbeitsraum 2 bzw. 3 kann sich bis auf den Wert aufbauen, bei dem die Druckbegrenzungsventile 10 bzw. 11 öffnen. Dabei können je nach Kinematik und Hebelverhältnissen auf den beiden Seiten unterschiedliche Kräfte und damit auch unterschiedliche Druckniveaus erforderlich sein. Der Druck und die dadurch erzeugte Kraft werden aber lediglich auf einen Wert eingestellt, der gerade ausreicht, um die Öffnungs- bzw. Schließbewegung in der jeweiligen Phase durch- bzw. weiterführen zu können. Unnötige und im Falle von Hindernissen zu Beschädigungen oder Verletzungen führende Kraftüberschüsse werden vermieden. Das Volumen des stangenseitigen Arbeitsraumes 3 fließt beim Ausfahren über das aufgesteuerte Rückschlagventil 7 und das Wechselventil 18 in den Tank 12 ab.

Bei Ausfall der umschaltbaren Druckmittelquelle 6, etwa bei einem Ausfall der Stromversorgung, sperren sofort die Rückschlagventile 7 und 8 und halten derart den normalerweise hydraulisch bewegten Teil in seiner gegenwärtigen Stellung fixiert. Gleichzeitig fällt auch der Druck in den Steuerleitungen 16 und 17 ab, so dass die hydraulische Sperre der zweiten Vorspannventile 14 und 15 aufgehoben wird. Die beiden Vorspannventile 14, 15 sind dann funktionsfähig und die zum nun manuellen Bewegen des Fahrzeugteils notwendige Kraft wird durch die Druckschwellenwerte dieser beiden Vorspannventile 14, 15 bestimmt. Der höhere der beiden Druckschwellenwerte sorgt im Einsatzfall als Haltedruck für das Fixieren des normalerweise hydraulisch betätigten Teils des Fahrzeuges in der jeweiligen Stellung, z.B. auch bei Schrägstellung des Fahrzeugs oder gegen Winddruck od. dgl. Soll nun eine manuelle Bewegung stattfinden, muss der Benutzer diesen Haltedruck - der auf beiden Seiten des hydraulischen Systems durch die separaten Vorspannventile 14 und 15 unterschiedlich gewählt werden kann - überwinden, was dann zum Umschalten des Vorspannventils auf seinen zweiten, niedrigeren Druckschwellenwert führt, so dass die dann zum weiteren Bewegen des Teils nötige Kraft deutlich geringer ist als die Haltekraft. Bei Nachlassen der zum Bewegen des Teils aufzuwendenden Kraft springt das Vorspannventil 14, 15 wieder auf seinen höheren Druckschwellenwert zurück und die Haltekraft kommt wieder zur Wirkung. In Fig. 2 ist im Längsschnitt ein erfindungsgemäßes Ausführungsbeispiel für ein zweistufiges Vorspannventil 14, 15 gezeigt, welches vorteilhafterweise in einer hydraulischen Anordnung wie oben beschrieben zur Anwendung kommen kann, auf derartige Anwendungen aber nicht beschränkt ist.

In einem Gehäuse 20 sind ein Eingangsanschluss 21 und ein Ausgangsanschluss 22 für das Druckmittel vorgesehen, zwischen welchen eine Passage 23 für das Druckmittel verläuft. Ein in einer Bohrung 24 verschiebbares Ventilelement 25 öffnet oder schließt im Zuge seiner Bewegung in der Bohrung 24 einen ersten Ventilsitz 26 für das Druckmittel. Ein Ende des Ventilelements 25 ist dabei in Form eines Ventilkegels 27 ausgeführt und wirkt mit einem zweiten Ventilsitz 28 zusammen. Dieser zweite Ventilsitz 28 ist eben und vorzugsweise von kreisrundem Querschnitt und wird mit Ventilkegel 27 in einer Endstellung des Ventilelementes 25 metallisch dichtend verschlossen. Durch den Unterschied im Querschnitt des zweiten Ventilsitzes 28, der kleiner ist als der Querschnitt der Bohrung 24 im Gehäuse 20 des Vorspannventils 14, 15, werden die beiden unterschiedlichen Druckschwellenwerte realisiert, da ja die Kraft zur Verschiebung des Ventilelementes 25 in beiden Fällen im wesentlichen gleich und nur von der Gegenkraft des elastischen Elementes, vorzugsweise in Form einer Schließfeder 29, ist. Durch die kegelförmige Ausbildung des Ventilelementes 25 ist ein sicherer Dichtsitz in Verbindung mit raschem Freigeben eines möglichst großen Durchlassquerschnittes gewährleistet, d.h. es ist ein rasches Umschalten von einem Druckschwellenwert auf den zweiten Druckschwellenwert sichergestellt.

Die Schließkraft der Feder 29 kann über die Stellschraube 30 eingestellt werden, welche in einer Gewindebohrung des Gehäuses 20 in Richtung der Bewegung des Ventilelementes 25 verstellbar und über Dichtungen 31 abgedichtet eingesetzt ist und bei Hineinschrauben ins Gehäuse 20 die Feder 29 zusammendrückt und derart die Federkraft verstärkt. Zum hydraulischen Sperren des Vorspannventils 14, 15 ist ein Steueranschluss 32 am Gehäuse 20 vorgesehen, welcher mit einer Passage 33 in der Stellschraube 30 in Verbindung steht, die die Funktion eines Arbeitsraumes eines hydraulischen Zylinders ausübt. Das Druckmittel in dieser Passage 33 beaufschlag einen in der Stellschraube 30 in Längsrichtung auf das Ventilelement 25 hin verschiebbaren stiftartigen Kolben 34, der schließlich eine Kraft in Schließrichtung des Ventilelementes 25 auf dessen Rückseite ausübt und derart das Ventil 14, 15 gänzlich sperrt.

Bei Verwendung in der oben beschriebenen hydraulischen Betätigungsanordnung ist der Steueranschluss 32 am Ventil 14, 15 mit der Steuerleitung 16 bzw. 17 verbunden. Am Eingangsanschluss 21 ist die Leitung 4 bzw. 5, ausgehend vom kolbenseitigen bzw. stangenseitigen Arbeitsraum 2, 3 des Arbeitszylinders angeschlossen und am Ausgangsanschluss 22 ist die in das Druckmittelreservoir 12 führende Leitung angeschlossen.

## Patentansprüche

1. Hydraulische Betätigungsanordnung, insbesonders für Deckel, Türen, Verdecke und dergleichen an Fahrzeugen, mit zumindest einem doppeltwirkenden Arbeitszylinder (1), dessen Arbeitsräume (2, 3) über je ein gegenseitig entsperrbares Rückschlagventil (7, 8) mit je einer Seite einer umschaltbaren Druckmittelquelle (6) in Verbindung stehen, wobei jeder Arbeitsraum (2, 3) über zumindest ein Druckbegrenzungs-Vorspannventil (10, 11) mit einem Druckmittelreservoir (12) verbunden ist, und zumindest ein Arbeitsraum (2, 3) zusätzlich über zumindest ein weiteres Vorspannventil (14, 15) mit dem Druckmittelreservoir (12) verbunden ist, welches weitere Vorspannventil (14, 15) über eine Steuerleitung (16, 17) mit der Druckmittelquelle (6) verbunden und dadurch hydraulisch sperrbar ist, **dadurch gekennzeichnet, dass** das zumindest eine weitere Vorspannventil (14, 15) zumindest zwei unterschiedliche Druckschwellenwerte aufweist.

2. Betätigungsanordnung nach Anspruch 1, **dadurch gekennzeichnet, dass** der Druckschwellenwert zum Öffnen des weiteren Vorspannventils (14, 15) höher ist als der Druckschwellenwert zu dessen Offenhalten.

3. Betätigungsanordnung nach Anspruch 1 oder 2, **dadurch gekennzeichnet, dass** jeder Arbeitsraum (2, 3) über je ein eigenes Vorspannventil (14, 15) mit dem Druckmittelreservoir (12) verbunden ist.

4. Betätigungsanordnung nach zumindest einem der Ansprüche 1 bis 3, **dadurch gekennzeichnet, dass** der kolbenseitige Arbeitsraum (2) des Arbeitszylinders (1) über eine Leitung mit einem zum Druckmittelreservoir (12) sperrenden Rückschlagventil (19) mit diesem Druckmittelreservoir verbunden ist.

5. Betätigungsanordnung gemäß einem der Ansprüche 1 bis 4, **dadurch gekennzeichnet, daß** das Vorspannventil (14, 15), ein Ventilgehäuse (20) und ein darin verschiebbares Ventilelement (25) zum Öffnen oder Schließen einer weiteren Durchströmöffnung (26) in einer Passage (23) für das Druckmittel aufweist, wobei das Ventilelement (25) in Schließrichtung der Durchströmöffnung (26) von einem elastischen Element (29) beaufschlagbar ist, und bei dem ein Steueranschluss (32) vorgesehen ist, über welchen das Ventilelement (25) ebenfalls in Schließrichtung mit einer Kraft beaufschlagbar ist, und dass in der Passage (23) eine durch das Ventilelement (25) sperrbare Durchströmöffnung (28) vorgesehen ist, wobei die Fläche der Durchströmöffnung (28) kleiner ist als die Querschnittsfläche des Ventilelementes (25) und wobei das die Durchströmöffnung (28) steuernde vordere Ende (27) des Ventilelementes (25) kegelförmig ausgeführt ist.

6. Betätigungsanordnung nach Anspruch 5, **dadurch gekennzeichnet, dass** das vordere Ende (27) des Ventilelementes (25) metallisch dichtend mit der Kante der Durchströmöffnung (28) zusammenwirkt und das Ventilelement (25) vorzugsweise auch die weitere Durchströmöffnung (26) metallisch dichtend im Ventilgehäuse (20) geführt ist.

7. Betätigungsanordnung nach Anspruch 5 oder 6, **dadurch gekennzeichnet, dass** ein Kolben (34) vorgesehen ist, der mittels des am Steueranschluss (32) anliegenden Druck auf das dem Ventilsitz (28) gegenüberliegende Ende des Ventilelements (25) hin mit einer Kraft beaufschlagbar ist.

## Claims

1. A hydraulic operating arrangement, in particular for lids, doors, folding tops and the like in vehicles, having at least one double-acting operating cylinder (1) whereof the operating chambers (2, 3) are each in communication by way of a respective, mutually deblockable nonretum valve (7, 8) with a respective side.of a reversible pressurised medium source (6), each operating chamber (2, 3) being connected by way of at least one pressure relief pre-tensioning valve (10, 11) to a pressurised medium reservoir (12), and at least one operating chamber (2, 3) additionally being connected by way of at least one further pre-tensioning valve (14, 15) to the pressurised medium reservoir (12), this further pre-tensioning valve (14, 15) being connected by way of a control line (16, 17) to the pressurised medium source (6) and being hydraulically blockable thereby, **characterised in that** the at least one further pre-tensioning valve (14, 15) has at least two different pressure threshold values.

2. An operating arrangement according to Claim 1, **characterised in that** the pressure threshold value for opening the further pre-tensioning valve (14, 15) is higher than the pressure threshold value for keeping it open.

3. An operating arrangement according to Claim 1 or 2, **characterised in that** each operating chamber (2, 3) is connected by way of a separate, respective pre-tensioning valve (14, 15) to the pressurised medium reservoir (12).

4. An operating arrangement according to at least one of Claims 1 to 3, **characterised in that** that operating chamber (2) of the operating cylinder (1) which is on the piston side is connected, by way of a line having a nonretum valve (19) blocking in the direction of the pressurised medium reservoir (12), to this pressurised medium reservoir.

5. An operating arrangement according to one of Claims 1 to 4, **characterised in that** the pre-tensioning valve (14, 15) has a valve housing (20) and a valve element (25) displaceable therein for opening or closing a further through-flow opening (26) in a passage (23) for the pressurised medium, with an elastic element (29) being capable of acting on the valve element (25) in the direction of closing the through-flow opening (26), and in which a control connection (32) is provided by way of which it is possible for a force to act on the valve element (25), also in the direction of closing, and **in that** a through-flow opening (28) which is blockable by the valve element (25) is provided in the passage (23), with the surface area of the through-flow opening (28) being smaller than the cross-sectional surface area of the valve element (25) and with the front end (27) of the valve element (25) which controls the through-flow opening (28) being conical in construction.

6. An operating arrangement according to Claim 5, **characterised in that** the front end (27) of the valve element (25) cooperates with the edge of the through-flow opening (28) with a metal-to-metal sealing effect, and the valve element (25) is guided in the valve housing (20), preferably also with a metal-to-metal sealing effect on the further through-flow opening (26).

7. An operating arrangement according to Claim 5 or 6, **characterised in that** a piston (34), which is capable of acting with a force by means of the pressure prevailing at the control connection (32) on that end of the valve element (25) opposite the valve seating (28), is provided.

## Revendications

1. Dispositif de commande hydraulique, en particulier pour capots, portes, capotes et autres équipements du même genre, dans des véhicules, avec au moins un vérin hydraulique (1) à double effet dont les chambres de travail (2, 3) communiquent chacune avec un côté respectif d'une source de fluide sous pression inversable (6) par un clapet anti-retour à déverrouillage mutuel (7, 8), moyennant quoi chaque chambre de travail (2, 3) est reliée à un réservoir de fluide sous pression (12) par au moins une soupape de limitation de pression sous précontrainte (10, 11), et au moins une chambre de travail (2, 3) est reliée, en plus, au réservoir de fluide sous pression (12) par au moins une autre soupape sous précontrainte (14, 15), laquelle autre soupape sous précontrainte (14, 15) est reliée à la source de fluide sous pression (6) par une conduite de pilotage (16, 17) et peut être ainsi verrouillée hydrauliquement, **caractérisé en ce que** la au moins une autre soupape sous précontrainte (14, 15) comporte au moins deux valeurs seuils de pression différentes.

2. Dispositif de commande selon la revendication 1, **caractérisé en ce que** la valeur seuil de pression pour l'ouverture de l'autre soupape sous précontrainte (14, 15) est supérieure à la valeur seuil de pression pour le maintien de celle-ci en position ouverte.

3. Dispositif de commande selon la revendication 1 ou 2, **caractérisé en ce que** chaque chambre de travail (2, 3) est reliée au réservoir de fluide sous pression (12) par sa propre soupape sous précontrainte (14, 15).

4. Dispositif de commande selon au moins l'une quelconque des revendications 1 à 3, **caractérisé en ce que** la chambre de travail du côté piston (2) du cylindre de travail (1) est reliée à ce réservoir de fluide sous pression par une conduite avec une soupape anti-retour (19) à verrouillage en direction du réservoir de fluide sous pression (12).

5. Dispositif de commande selon au moins l'une quelconque des revendications 1 à 4, **caractérisé en ce que** la soupape sous précontrainte (14, 15) comporte un carter de soupape (20) et un élément de soupape (25) insérable dans celui-ci pour l'ouverture ou la fermeture d'un autre orifice de passage (26) dans un passage (23) pour le fluide sous pression, moyennant quoi l'élément de soupape (25) peut être alimenté par un élément élastique (29) dans le sens de fermeture de l'orifice de passage (26), et dans lequel il est prévu un branchement de commande (32) par l'intermédiaire duquel l'élément de soupape (25) peut être alimenté par une force également dans le sens de fermeture, et **en ce qu'**il est prévu dans le passage (23) un orifice de passage (28) verrouillable par l'élément de soupape (25), moyennant quoi la surface de l'orifice de passage (28) est plus petite que l'aire de la section de l'élément de soupape (25) et moyennant quoi l'extrémité avant (27) de l'élément de soupape (25) commandant l'orifice de passage (28) est configurée en forme de cône.

6. Dispositif de commande selon la revendication 5, **caractérisé en ce que** l'extrémité avant (27) de l'élément de soupape (25) coopère de manière étanche métalliquement avec l'arête de l'orifice de passage (28) et l'élément de soupape (25) est guidé, de préférence de manière à étancher métalliquement également l'autre orifice de passage (26) dans le carter de soupape (20).

7. Dispositif de commande selon la revendication 5 ou 6, **caractérisé en ce qu'**il est prévu un piston (34) qui peut être alimenté par une force à l'aide de la pression appliquée au niveau du branchement de commande (32) à l'extrémité de l'élément de soupape (25) opposée au siège de soupape (28).
